# FASCICULE DE BREVET EUROPEEN

(11) **EP 0 630 027 B1**
(45) Date de publication et mention de la délivrance du brevet: **03.05.2000**
(21) Numéro de dépôt: 94401139.4
(22) Date de dépôt: 24.05.1994
(51) Int. Cl.: G11C 16/06, G07F 7/10, G06F 11/14

(54) **Procédé pour sécuriser les écritures de données sensibles dans la mémoire de stockage de données EEPROM d'une carte à mémoire, et carte à mémoire pour la mise en oeuvre de ce procédé**
Verfahren zum Abspeichern und Sichern von empfindlicher Daten in eine EEPROM Speicherkarte und entsprechende Speicherkarte.
Method to guarantee integrity of writing of sensitive data in an EEPROM memory card and corresponding memory card.

(30) Priorité: 26.05.1993 FR 9306287
(43) Date de publication de la demande: 21.12.1994
(73) Titulaire: SCHLUMBERGER Systèmes, 92120 Montrouge (FR)
(72) Inventeur: Debelleix, Olivier, F-45100 Orleans (FR); Thiriet, Fabien, F-45100 Orleans (FR)
(74) Mandataire: Bugnon-Hays, Claudine

(56) Documents cités:
- EP-A- 0 398 545
- WO-A-89/10618
- WO-A-92/04716

## Description

La présente invention concerne d'une part un procédé pour sécuriser les écritures de données sensibles dans la mémoire de stockage de données EEPROM d'une carte à mémoire, d'autre part une carte à mémoire ou carte a puce pour la mise en oeuvre dudit procédé.

Dans une carte à mémoire, notamment du type porte-monnaie, c'est-à-dire contenant des informations de nature financière, une réserve d'argent, un crédit, ou dans une carte contenant toute information confidentielle, un des principaux problèmes est de garantir l'intégrité des données présentes en mémoire, suite à un arrachage intempestif de la carte, à un défaut d'alimentation du terminal de traitement, ou à une panne de programme.

Par exemple, le montant du crédit disponible inscrit sur une carte de paiement ou celui figurant sur une carte d'accès à un restaurant pourrait être annulé ou modifié suite à un arrachage intempestif ou à un défaut.

On connaît du document WO 89/10618 un procédé de sécurisation de données dans une mémoire non volatile consistant à sauvegarder une donnée nouvelle dans une mémoire tampon puis écrire cette donnée dans une zone de données de la mémoire non volatile. Dès le début de l'étape d'écriture dans la zone de données la mémoire ne contient plus aucune donnée ancienne de sorte que ce procédé serait inexploitable dans un porte-monnaie électronique.

L'objet de l'invention est de remettre les données dans un état fiable quelque soit l'instant où survient l'incident.

Selon l'invention on propose un procédé pour sécuriser des écritures de données sensibles dans la mémoire de stockage de données EEPROM d'une carte à mémoire, lequel se caractérise en ce qu'il consiste, lors de chaque écriture, à effectuer successivement les opérations suivantes :
a) inscrire l'adresse de départ de la zone de données de la carte où il faut effectuer une écriture, dans un champ adresse de la mémoire ;
b) lire les données présentes dans cette zone de données de la mémoire ;
c) stocker les données lues dans une zone de sauvegarde de la mémoire ;
d) écrire la donnée "ECRITURE EN COURS" dans une zone drapeau de la mémoire ;
e) effectuer l'écriture dans la zone de données de la mémoire ; et
f) écrire la donnée "PAS D'ECRITURE EN COURS" dans la zone drapeau de la mémoire.

Ceci permet de sauvegarder une copie des données initiales, avant toute modification ou mise à jour, tout en conservant et en mettant à jour l'information sur la survenance ou l'absence de difficulté lors du traitement.

Avantageusement, le procédé selon l'invention consiste, lors de chaque mise sous tension de la carte à puce, à effectuer les opérations suivantes :
a) lire la donnée "DRAPEAU" dans la zone drapeau de la mémoire et continuer normalement le programme d'exploitation de la carte dans le cas où cette donnée est égale à "PAS D'ECRITURE EN COURS", et
b) si la donnée "DRAPEAU" est égale à "ECRITURE EN COURS" :
   - recopier les données stockées dans la zone de sauvegarde de la mémoire dans la zone de données, en commençant à partir de l'adresse spécifiée dans le champ adresse, puis
   - écrire la donnée "PAS D'ECRITURE EN COURS" dans la zone drapeau de la mémoire.

Ainsi, en cas de difficulté, par exemple causée par une discontinuité dans l'exécution du procédé, la situation initiale est rétablie, et en cas d'absence de difficulté, le programme se poursuit normalement.

Le procédé selon l'invention peut avantageusement être mis en oeuvre dans une carte à mémoire et, dans ce cas, il est prévu dans la mémoire de stockage des données EEPROM (mémoire non volatile, effaçable et réutilisable) :
- une zone de données pour y effectuer des écritures,
- un champ adresse pour y inscrire l'adresse de départ desdites écritures,
- une zone de sauvegarde pour y stocker temporairement des données déjà écrites,
- une zone drapeau pour y écrire la donnée "ECRITURE EN COURS" ou la donnée "PAS D'ECRITURE EN COURS".

Ainsi, la carte à puce conserve une copie des données sensibles et, lors de chaque écriture sur lesdites données sensibles ou lors de chaque mise sous tension, les données sont rétablies dans leur état initial si le programme révèle qu'une anomalie s'est produite, telle qu'un arrachage intempestif, une chute ou un arrêt de tension, ou tout événement susceptible de mettre en cause la sécurité du traitement ou des données sensibles concernées.

L'invention sera décrite ci-après en référence à la figure unique représentant une vue schématique d'une carte à mémoire ainsi que les différentes interventions sur les mémoires de la carte et les différentes étapes du procédé.

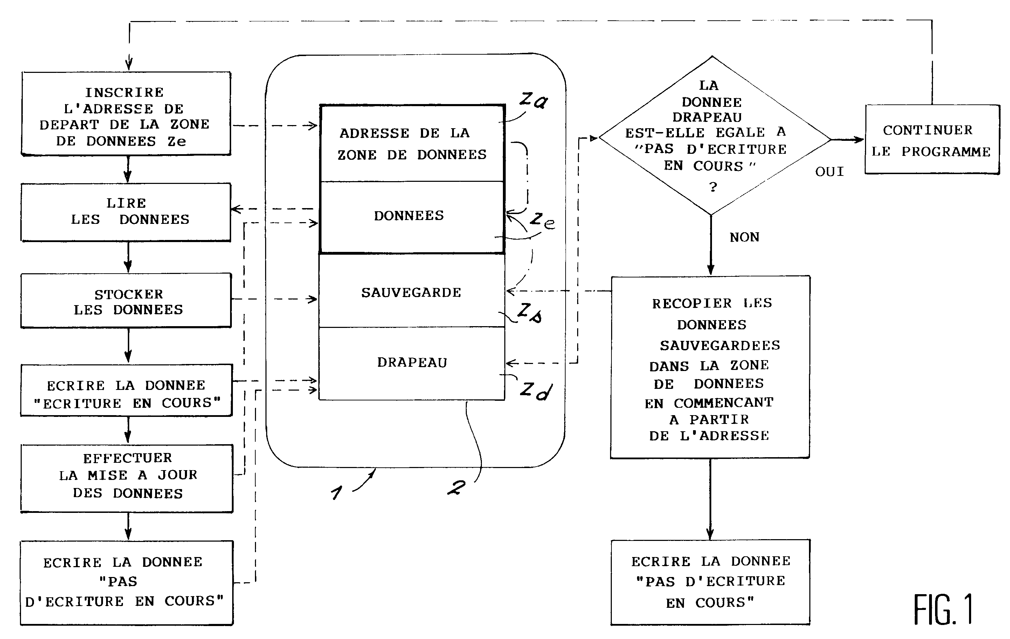

Dans l'exemple non limitatif représenté à la figure 1, la référence 1 représente une carte à mémoire utilisée dans un restaurant d'entreprise équipé d'un système de paiement par carte. Les utilisateurs disposent d'une carte à puce dotée d'une mémoire EEPROM 2 qui contient une valeur représentant une somme d'argent et ils peuvent recharger quand bon leur semble leur carte, en la glissant dans un lecteur et en indiquant un code secret. La somme d'argent chargée dans la carte sera automatiquement débitée par l'ordinateur chargé du calcul des rémunérations des collaborateurs de l'entreprise. Pour payer un repas, l'utilisateur du restaurant se présente à une caissière qui enregistre les consommations ; l'utilisateur glisse sa carte dans un lecteur présent au voisinage de la caisse, puis indique son code secret. A ce moment, la somme d'argent virtuellement contenue dans la carte est directement débitée du prix du repas. Si l'utilisateur retire sa carte du lecteur pendant que la transaction du débit du repas s'effectue, la valeur inscrite dans la carte pourra être quelconque, selon le moment, dans la séquence d'écriture, où la carte a été retirée ; ce pourrait être une valeur nulle ou toute autre valeur inférieure ou supérieure à la valeur correcte.

En résumé, la carte n'a pas le niveau de sécurité exigé pour ce type d'application.

Au contraire, la carte à puce conforme à la présente invention permet de remédier à ces inconvénients et comporte à cet effet, dans la mémoire de stockage des données EEPROM 2, au moins quatre zones de mémoire :
- une zone de données Ze pour y effectuer des écritures,
- un champ adresse Za pour y inscrire l'adresse de départ desdites écritures,
- une zone de sauvegarde Zs pour y stocker temporairement des données déjà écrites,
- une zone drapeau Zd pour y écrire la donnée "ECRITURE EN COURS" ou la donnée "PAS D'ECRITURE EN COURS".

Dans la zone Zd est présente une donnée "DRAPEAU".

Ainsi lorsque l'utilisateur du restaurant d'entreprise présente sa carte dans le lecteur, les opérations décrites ci-dessous sont effectuées, après lecture de la donnée "DRAPEAU" dans la zone Zd.

Dans le cas où la valeur de la donnée "DRAPEAU" est égale à "PAS D'ECRITURE EN COURS", le programme d'exploitation de la carte peut continuer, en particulier la mise à jour du solde disponible pour les repas à venir, selon le procédé suivant :
- l'adresse de départ de la zone de données de la carte où il faut effectuer une écriture est inscrite dans le champ adresse Za ;
- les données présentes dans la zone de données Ze sont lues et sont stockées dans la zone de sauvegarde Zs;
- la donnée "ECRITURE EN COURS" est écrite dans la zone drapeau Zd ;
- l'écriture de mise à jour de la carte est effectuée dans la zone Ze ; et
- la donnée "PAS D'ECRITURE EN COURS" est écrite dans la zone drapeau Zd de la mémoire.

Lorsque la mise à jour de la carte est terminée, l'utilisateur la retire du lecteur.

Mais si, soit au cours d'une précédente utilisation de la carte, soit au cours du procédé décrit ci-dessus, par suite par exemple d'une coupure de courant ou d'un retrait intempestif de la carte hors du lecteur, la donnée "PAS D'ECRITURE EN COURS" n'a pas remplacé dans la zone Zd la valeur précédente "ECRITURE EN COURS", la donnée "DRAPEAU" est égale à "ECRITURE EN COURS".

Dans cette hypothèse, on n'est pas assuré que les données Zd soient exactes, et puisque la valeur de la donnée "DRAPEAU" est égale à "ECRITURE EN COURS", le procédé alors mis en oeuvre comporte les étapes suivantes :
- les données stockées dans la zone de sauvegarde Zs sont recopiées dans la zone de données Zd, en commençant à partir de l'adresse spécifiée dans le champ adresse Za, puis
- la donnée "PAS D'ECRITURE EN COURS" est écrite dans la zone drapeau Zd de la mémoire.

On voit donc qu'en cas d'événement intempestif survenu au cours du cycle de mise à jour des données, celles-ci ne sont pas fiables et sont alors remplacées par les données précédemment sauvegardées en Zs.

L'utilisateur peut alors se servir de sa carte pour comptabiliser son repas, à la suite de quoi la donnée "DRAPEAU" de la zone de mémoire Zd devrait reprendre la valeur normale "PAS D'ECRITURE EN COURS".

Cet exemple a été décrit à titre d'illustration non limitative de la carte à mémoire et du procédé selon l'invention.

En conclusion, par l'utilisation d'une carte à mémoire et du procédé décrits, l'invention permet de remédier aux problèmes causés par des disfonctionnements divers dans le domaine de la sécurité des cartes à mémoire, tels qu'arrachage, rupture de courant et autres.

## Revendications

1. Procédé pour sécuriser les écritures de données sensibles dans la mémoire de stockage de données EEPROM (2) d'une carte à mémoire (1), caractérisé en ce qu'il consiste, lors de chaque écriture, à effectuer successivement les opérations suivantes :
a) inscrire l'adresse de départ de la zone de données (Ze) de la carte où il faut effectuer une écriture, dans un champ adresse (Za) de la mémoire ;
b) lire les données présentes dans cette zone de données (Ze) de la mémoire ;
c) stocker les données lues dans une zone de sauvegarde (Zs) de la mémoire ;
d) écrire la donnée "ECRITURE EN COURS" dans une zone drapeau (Zd) de la mémoire ;
e) effectuer l'écriture dans la zone de données (Ze) de la mémoire ; et
f) écrire la donnée "PAS D'ECRITURE EN COURS" dans la zone drapeau (Zd) de la mémoire.

2. Procédé selon la revendication 1, caractérisé en ce qu'il consiste, lors de chaque mise sous tension de la carte à mémoire, à effectuer les opérations suivantes :
a) lire la donnée "DRAPEAU" dans la zone drapeau (Zd) de la mémoire et continuer normalement le programme d'exploitation de la carte dans le cas où cette donnée est
égale à "PAS D'ECRITURE EN COURS", et
b) si la donnée "DRAPEAU" est égale à "ECRITURE EN COURS" :
- recopier les données stockées dans la zone de sauvegarde (Zs) de la mémoire dans la zone de données (Ze), en commençant à partir de l'adresse spécifiée dans le champ adresse (Za), puis
- écrire la donnée "PAS D'ECRITURE EN COURS" dans la zone drapeau (Zd) de la mémoire.

3. Carte à mémoire pour la mise en oeuvre du procédé selon la revendication 1 ou 2, caractérisée en ce qu'il est prévu dans la mémoire de stockage des données EEPROM :
- une zone de données (Ze) pour y effectuer des écritures,
- un champ adresse (Za) pour y inscrire l'adresse de départ desdites écritures,
- une zone de sauvegarde (Zs) pour y stocker temporairement des données déjà écrites,
- une zone drapeau (Zd) pour y écrire la donnée "ECRITURE EN COURS" ou la donnée "PAS D'ECRITURE EN COURS".

## Claims

1. A method of securing the writing of sensitive data in the EEPROM data storage memory (2) of a memory card (1), the method being characterized in that it consists, during each write, in performing the following operations in succession:
a) writing, in an address field (Ze) of the memory, the starting address of the card data zone (Ze) in which a write is to be performed;
b) reading the data present in said data zone (Ze) of the memory;
c) storing the data ace read in a backup zone (Zs) of the memory;
d) writing a "WRITING IN PROGRESS" data item in a flag zone (Zd) of the memory;
e) writing in the data zone (Ze) of the memory; and
f) writing a "WRITING NOT IN PROGRESS" data item in the flag zone (Zd) of the memory.

2. A method according to claim 1, characterized in that, on each occasion that the memory card is powered up, the method consists in performing the following operations:
a) reading the "FLAG" data item in the flag zone (Zd) of the memory and proceeding normally with the card operating program in the event that said data item is equal to "WRITING NOT IN PROGRESS"; and
b) if the "FLAG" data item is equal to "WRITING IN PROGRESS":
- copying the data stored in the backup zone (Zs) of the memory into the data zone (Ze), starting from the address specified in the address zone (Za), and then
- writing the "WRITING NOT IN PROGRESS" data item in the flag zone (Zd) of the memory.

3. A memory card for implementing the method of claim 1 or 2, the card being characterized in that the following are provided in the EEPROM data storage memory thereof:
- a data zone (Ze) in which writing takes place;
- an address field (Za) for having the starting address of said writing recorded therein;
- a backup zone (Zs) for temporarily storing therein data that has already been written; and
- a flag zone (Zd) for having written therein either the data item "WRITING IN PROGRESS" or the data item "WRITING NOT IN PROGRESS".

## Patentansprüche

1. Verfahren zum Sichern der Speichervorgänge beim Einspeichern empfindlicher Daten in einen EEPROM-Datenspeicher (2), einer Speicherkarte (1), **dadurch gekennzeichnet**, daß während jedes Speichervorganges folgende Operationen nacheinander ausgeführt werden:
a) Einschreiben der Startadresse der Datenzone (Ze) der Karte, wo ein Speichervorgang erfolgen soll, in ein Adressenfeld (Za) des Speichers;
b) Lesen der in dieser Datenzone (Ze) des Speichers vorhandenen Daten;
c) Speichern der gelesenen Daten in einer Sicherungszone (Zs) des Speichers;
d) Einspeichern des Datums 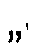 SPEICHERVORGANG LÄUFT" in eine Flag-Zone (Zd) des Speichers;
e) Ausführen des Speichervorganges in der Datenzone (Ze) des Speichers und
f) Speichern des Datums 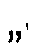 SPEICHERVORGANG LÄUFT NICHT" in der Flag-Zone (Zd) des Speichers.

2. Verfahren nach Anspruch 1, **dadurch gekennzeichnet**, daß bei jedem Anlegen einer Spannung an die Speicherkarte folgende Operationen ausgeführt werden:
a) Lesen der 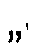 FLAG" in der Flag-Zone (Zd) des Speichers und normales Fortsetzen des Arbeitsprogrammes des Karte für den Fall, daß diese Flag gleich 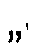 SPEICHERVORGANG LÄUFT NICHT" ist und
b) wenn die Flag gleich 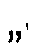 SPEICHERVORGANG LÄUFT" ist:
Umkopieren der in der Sicherungszone (Zs) des Speichers gespeicherten Daten in die Datenzone (Ze), wobei man bei der in dem Adressenfeld (Za) angegebenen Adresse beginnt, und anschließend
Speichern der Flag 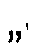 SPEICHERVORGANG LÄUFT NICHT" in der Flag-Zone (Zd) des Speichers.

3. Speicherkarte zum Durchführen des Verfahrens nach Anspruch 1 oder 2, **dadurch gekennzeichne**t, daß in dem EEPROM-Datenspeicher vorgesehen ist:
eine Datenzone (Ze) zum Durchführen von Speichervorgängen in dieser,
ein Adressenfeld (Za) zum Einschreiben der Startadresse für die genannten Speichervorgänge,
eine Sicherungszone (Zs) zur zeitweiligen Aufnahme von bereits gespeicherten Daten, und
eine Flag-Zone (Ze), in welche die Flag 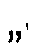 SPEICHERVORGANG LÄUFT" oder 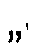 SPEICHERVORGANG LÄUFT NICHT" eingeschrieben werden kann.
